# EUROPÄISCHE PATENTANMELDUNG

(11) **EP 2 573 610 A1**
(43) Veröffentlichungstag der Anmeldung: **27.03.2013**
(21) Anmeldenummer: 12185497.0
(22) Anmeldetag: 21.09.2012
(51) Int. Cl.: G02B 23/00, G02B 23/18

(54) **Binokulares Fernrohr mit Dioptrienkorrektur**

(30) Priorität: 23.09.2011 DE 102011083352
(71) Anmelder: Carl Zeiss Sports Optics GmbH, 35576 Wetzlar (DE)
(72) Erfinder: Syré, Philipp, 35435 Wettenberg (DE); Bublitz, Daniel, 07646 Rausdorf (DE); Kuhn, David, 35578 Wetzlar (DE); Heintz, Christof, 61440 Oberursel (DE)
(74) Vertreter: Geyer, Fehners & Partner

(57) **Zusammenfassung**

Es wird bereitgestellt ein binokulares Fernrohr mit einer einen linken und einen rechten Beobachtungskanal (7, 8) aufweisenden Beobachtungsoptik, einer Einrichtung (15, 16, 17, 14, 14') zur gleichzeitigen Fokussierung des linken und rechten Beobachtungskanals (7, 8), und einem Modul (20, 21, 22, 30) zur Dioptrienkorrektur, wobei das Modul (20 - 22, 30) über die beiden Beobachtungskanäle (7, 8) den relativen sphärischen Augenfehler zwischen beiden Augen (5, 6) des Benutzers mißt und in Abhängigkeit des gemessenen relativen sphärischen Augenfehlers die Abbildungseigenschaften in einem der beiden Beobachtungskanäle (7, 8) so ändert, daß der relative sphärische Augenfehler kompensiert ist.

## Beschreibung

Die vorliegende Erfindung betrifft ein binokulares Fernrohr gemäß dem Oberbegriff des Anspruches 1 sowie ein Verfahren zur Durchführung einer Dioptrienkorrektur bei einem binokularen Fernrohr gemäß dem Oberbegriff des Anspruches 14.

Ein solches binokulares Fernrohr kann von einem Beobachter ohne Brille und mit Fehlsichtigkeit nur dann voll genutzt werden, wenn der Augenfehler des Beobachters vorab durch die am Fernglas vorhandene Dioptrienkorrektur ausgeglichen wird. Die Dioptrienkorrektur gleicht dabei nicht den absoluten Fehler des linken und rechten Auges aus, sondern es erfolgt eine Kompensation der Dioptriendifferenz zwischen linkem und rechtem Auge. Besitzen beide Augen eine Fehlsichtigkeit, so wird durch die Kompensation auch der mechanische Fokussierweg des Fernglases eingeschränkt (Überhub).

Ältere Beobachter haben besonders bei schwachen Lichtverhältnissen die Schwierigkeit, die Dioptrienkorrektur exakt einzustellen. Generell ist es den meisten Beobachtern nicht ohne Einweisung möglich, die Dioptrienkorrektur korrekt durchzuführen. Fehleinstellungen werden von ungeübten Beobachtern einfach als gegeben hingenommen.

Je nach Hersteller oder Fernglastyp kann die Dioptrienkorrektur z.B. direkt am linken oder rechten Okular des Fernglases ausgeführt werden. Der Beobachter fokussiert erst auf der Seite des Fernglases, die keine Korrekturmöglichkeit bietet, auf ein zu beobachtendes Objekt. Dann korrigiert der Beobachter die Bildschärfe auf der Seite der Dioptrienkorrektur über einen Einstellring oder -hebel, entweder mit oder ohne Rastung. Die Genauigkeit der Einstellung beträgt maximal ca. ± 0,25 Dioptrien. Viele Beobachter erreichen diese Genauigkeit jedoch nicht. Die Folge ist eine ständige Bildschärfedifferenz zwischen rechtem und linkem Auge. Die Wahrnehmung wird gemindert und der Beobachter ermüdet sehr viel schneller.

Mit zunehmendem Alter verringert sich die Akkommodationsfähigkeit des Beobachters. Für einen zwanzig Jahre alten Menschen kann sie 10 Dioptrien betragen, für einen 45-jährigen z.B. nur noch 5 Dioptrien. Entsprechend sind ältere Menschen immer mehr auf eine genaue Dioptrienkompensation zwischen linkem und rechtem Auge angewiesen, um die volle optische Leistungsfähigkeit des binokularen Fernrohrs ausnutzen zu können. Eine automatische Einstellung der Kompensation würde die Nutzung erheblich erleichtern und einen maximalen Seherfolg sichern.

Ausgehend hiervon ist es Aufgabe der Erfindung, ein binokulares Fernrohr der eingangs genannten Art so weiterzubilden, daß auch Benutzer mit Fehlsichtigkeit mit beiden Augen ohne Brille ein gleich scharfes Bild wahrnehmen können. Ferner soll ein Verfahren zum Durchführen einer Dioptrienkorrektur bei einem binokularen Fernrohr bereitgestellt werden.

Die Aufgabe wird bei einem binokularen Fernrohr der eingangs genannten Art dadurch gelöst, daß das Modul zur Dioptrienkorrektur über die beiden Beobachtungskanäle den relativen sphärischen Augenfehler zwischen beiden Augen des Benutzers mißt und in Abhängigkeit des gemessenen relativen sphärischen Augenfehlers die Abbildungseigenschaften in einem der beiden Beobachtungskanäle so ändert, daß der relative sphärische Augenfehler (bzw. die Dioptriendifferenz zwischen beiden Augen) kompensiert ist.

Es wird somit die relative Defokussierung beider Augen gemessen und kompensiert, so daß dann der Benutzer mittels der Einrichtung zur gleichzeitigen Fokussierung des linken und rechten Beobachtungskanals die gewünschte Fokussierung selbst einstellen kann. Wesentlich ist, daß der Benutzer über beide Beobachtungskanäle stets ein gleich scharfes Bild wahrnehmen kann, so daß weder die Wahrnehmung durch etwaige Fehleinstellungen gemindert wird noch eine frühzeitige Ermüdung auftritt, was die Folge von unterschiedlich scharf wahrgenommenen Bildern über beide Beobachtungskanäle ist.

Bei dem erfindungsgemäßen binokularen Fernrohr, das auch als binokulares Fernglas bezeichnet werden kann, führt das Modul zur Dioptrienkorrektur somit eine automatische Dioptrienkompensation durch, so daß Fehleinstellungen durch den Benutzer vermieden werden können.

Bei dem erfindungsgemäßen binokularen Fernrohr kann das Modul zur Dioptrienkorrektur die Abbildungseigenschaft des einen Beobachtungskanals durch Bewegen einer Linse ändern. Die Linse kann insbesondere relativ zum Auge des Benutzers bei Benutzung des Fernrohrs und/oder entlang der optischen Achse des Beobachtungskanals bewegt werden.

Ferner kann das Modul zur Dioptrienkorrektur den Defokuszustand beider Augen messen und daraus den relativen sphärischen Augenfehler ableiten. Eine solche Messung des Defokuszustandes der Augen ist leicht mit der notwendigen Genauigkeit durchführbar.

Bei dem erfindungsgemäßen binokularen Fernrohr kann das Modul zur Dioptrienkorrektur für jeden der beiden Beobachtungskanäle jeweils eine Lichtquelle, die einen Lichtstrahl abgibt, und ein optisches System, das den Lichtstrahl über den Beobachtungskanal in das jeweilige Auge des Benutzers führt, und einen Detektor aufweisen, wobei der am Augenhintergrund des Auges reflektierte Lichtstrahl über den Beobachtungskanal und das optische System auf den Detektor gerichtet wird, der ein Detektorsignal abgibt, und wobei anhand der beiden Detektorsignale der relative sphärische Augenfehler abgeleitet wird. Ein solcher optischer Aufbau läßt sich in kompakter Weise realisieren, so daß er in ein tragbares binokulares Fernrohr integriert werden kann.

Die Lichtquelle, das optische System und der Detektor können in jedem der beiden Beobachtungskanäle jeweils als konfokale Meßanordnung ausgebildet sein.

Ferner kann die Lichtquelle den Lichtstrahl mit einer Wellenlänge abgeben, die für den Benutzer nicht sichtbar ist. Bevorzugt ist eine Wellenlänge im Bereich von 780 - 1.060 nm.

Ferner kann die Lichtquelle als Punktlichtquelle ausgebildet sein. Sie kann z.B. als LED oder als Halbleiterlaser (beispielsweise als VCSEL) ausgebildet sein.

Das Modul zur Dioptrienkorrektur kann die Spotgröße auf dem Detektor und/oder die Intensität des Spots auf dem Detektor als Detektorsignal auswerten.

Insbesondere kann zwischen dem optischen System einerseits und der Lichtquelle und dem Detektor andererseits ein Strahlteiler angeordnet sein. Dies ermöglicht einen kompakten optischen Aufbau.

Der Strahlteiler kann als Polarisationsstrahlteiler ausgebildet sein. Dies ist vorteilhaft, um unerwünschtes Streulicht zu unterdrücken und somit die Meßgenauigkeit zu verbessern.

Bei dem erfindungsgemäßen Fernrohr kann jeder Beobachtungskanal ein Objektiv, ein Prismensystem und ein Okular aufweisen, wobei das optische System den Lichtstrahl der Lichtquelle über das Prismensystem in den Beobachtungskanal einkoppelt.

Die Einrichtung zur gleichzeitigen Fokussierung kann ein einzelnes Einstellelement aufweisen, wobei bei dessen Betätigung die synchrone Fokussierung der beiden Beobachtungskanäle erfolgt. Das Einstellelement kann z.B. ein Einstellrad, ein Einstellring oder ein Einstellhebel sein.

Es wird ferner bereitgestellt ein Verfahren zum Durchführen einer Dioptrienkorrektur bei einem binokularen Fernrohr mit einer einen linken und einen rechten Beobachtungskanal aufweisenden Beobachtungsoptik und einer Einrichtung zur gleichzeitigen Fokussierung des linken und rechten Beobachtungskanals, wobei über die beiden Beobachtungskanäle der relative sphärischen Augenfehler zwischen den beiden Augen des Benutzers gemessen wird und in Abhängigkeit des gemessenen relativen sphärischen Augenfehlers die Abbildungseigenschaften in einem der beiden Beobachtungskanäle so geändert werden, daß der relative sphärische Augenfehler kompensiert wird.

Mit diesem Verfahren der Dioptrienkorrektur bei einem binokularen Fernrohr kann in einfacher Art und Weise die gewünschte Dioptrienkorrektur automatisch mit hoher Genauigkeit durchgeführt werden.

Bei dem Verfahren kann der Defokuszustand beider Augen gemessen und daraus der relative sphärische Augenfehler abgeleitet werden.

Ferner können die Abbildungseigenschaften des einen Beobachtungskanals durch Bewegen einer Linse geändert werden.

Des weiteren kann in jedem der beiden Beobachtungskanäle jeweils ein Lichtstrahl abgegeben und über den Beobachtungskanal in das jeweilige Auge des Benutzers geführt werden, wobei der am Augenhintergrund des Auges reflektierte Lichtstrahl über den Beobachtungskanal auf einen Detektor gerichtet wird, der ein Detektorsignal abgibt, wobei anhand der beiden Detektorsignale der relative sphärische Augenfehler abgeleitet wird. Der Lichtstrahl kann eine Wellenlänge im Bereich von 780 - 1.060 nm aufweisen.

Insbesondere kann die Spotgröße auf dem Detektor und/oder die Intensität des Spots auf dem Detektor als Detektorsignal ausgewertet werden.

Es versteht sich, daß die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen. Insbesondere kann das binokulare Fernrohr so weitergebildet werden, daß mit ihm das erfindungsgemäße Verfahren zum Durchführen einer Dioptrienkorrektur (einschließlich der Weiterbildungen des erfindungsgemäßen Verfahrens) ausführbar ist. Ferner kann das erfindungsgemäße Verfahren zum Durchführen einer Dioptrienkorrektur (einschließlich seiner Weiterbildungen) noch solche Verfahrensschritte aufweisen, die im Zusammenhang mit dem erfindungsgemäßen binokularen Fernrohr sowie der Weiterbildung des binokularen Fernrohrs angegeben sind.

Nachfolgend wird die Erfindung beispielsweise anhand der beigefügten Zeichnungen, die auch erfindungswesentliche Merkmale offenbaren, noch näher erläutert. Es zeigen:
- Fig. 1: eine Schnittdarstellung einer Ausführungsform des erfindungsgemäßen binokularen Fernrohr;
- Fig.2: ein Diagramm, das die Abhängigkeit des gemessenen Spotradius von dem Fokuszustand des Auges zeigt, und
- Fig. 3: eine schematische Darstellung zur Erläuterung der Ankopplung der konfokalen Meßanordnung an den jeweiligen Beobachtungskanal des erfindungsgemäßen binokularen Fernrohrs.

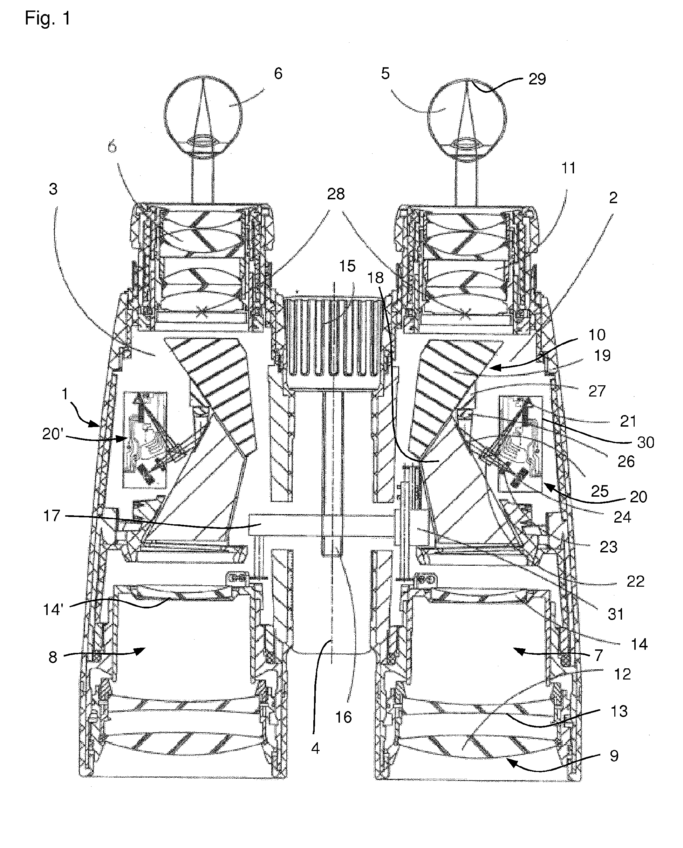

Bei der in Fig. 1 gezeigten Ausführungsform ist das binokulare Fernrohr 1 als Prismenfernglas mit einer rechten Hälfte 2 und einer linken Hälfte 3 ausgebildet, die um eine Mittelachse 4 schwenkbar sind, um in bekannter Weise eine Anpassung an den Abstand des rechten und linken Auges 5, 6 des Benutzers durchführen zu können. Da die Optiken der rechten und linken Hälfte 2, 3 zur Mittelachse 4 spiegelsymmetrisch ausgebildet sind, wird nachfolgend im wesentlichen nur der optische Aufbau der rechten Hälfte 2 unter Bezugnahme auf die Schnittdarstellung des binokularen Fernrohrs 1 in Fig. 1 beschrieben.

In der rechten Hälfte 2 ist ein rechter Beobachtungskanal 7 mit einem Objektiv 9, einem Prismensystem 10 und einem Okular 11 angeordnet.

Das Objektiv 9 weist drei Linsen 12, 13, 14 auf, wobei die Linsen 12 und 13 in der rechten Hälfte 2 fixiert sind und die dritte Linse 14 als Fokussierlinse 14 in Längsrichtung der rechten Hälfte 2 verschiebbar gelagert ist. Die dritte Linse 14 kann durch Drehen eines Fokusknopfes 15 in Längsrichtung verschoben werden, wobei der Fokusknopf 15 drehfest mit einer Stange 16 verbunden ist, die im Bereich des dem Fokusknopf 15 abgewandten Endes ein Außengewinde aufweist, das in Eingriff mit einem entsprechenden Innengewinde eines Halters 17 steht, an dem die dritte Linse 14 der rechten Hälfte sowie die entsprechende dritte Linse 14' der linken Hälfte 3 so befestigt sind, daß beide Linsen 14 und 14' bei Drehung des Fokusknopfes 15 um denselben Weg in derselben Richtung bewegt werden. Somit ist eine synchrone Fokussierung der rechten und linken Hälfte 2, 3 mittels des Fokusknopfs 15 möglich.

Das Prismensystem 10 weist hier ein erstes und ein zweites Umkehrprisma 18, 19 auf, die hier ein Abbe-König-Prismensystem bilden.

Das Okular 11 weist mehrere Linsen auf, wie in Fig. 1 gezeigt ist.

Ferner ist im rechten Beobachtungskanal 7 im Bereich des Prismensystems 10 eine erste konfokale Meßanordnung 20 angeordnet. Die erste konfokale Meßanordnung 20 umfaßt einen Emitter 21 (z.B. eine Diode oder einen Halbleiterlaser, insbesondere einen VCSEL), der einen Lichtstrahl mit einer Wellenlänge von 850 nm abgibt, einen Strahlteiler 22, eine Detektorlinse 23, einen Detektor 24, eine an der Seitenfläche des ersten Umkehrprismas 18 vorgesehene Reflexionsschicht 25 (z.B. eine dielektrische Schicht oder eine metallische Schicht), ein optisches System 26 sowie ein Hilfsprisma 27, das über eine Strahlteilerschicht mit dem zweiten Umkehrprisma 19 verkittet ist.

Der Emitter 21 ist bevorzugt als Punktlichtquelle ausgebildet, die in einem Wellenlängenbereich emittiert, der für den Benutzer nicht wahrnehmbar ist.

Der vom Emitter 21 abgegebene Lichtstrahl wird durch den Strahlteiler 22 zur Reflexionsschicht 25 gelenkt und von dieser durch das optische System 26, das Hilfsprisma 27 und das Umkehrprisma 19 geführt, so daß in einer Zwischenbildebene 28 der Emitter 21 abgebildet ist. Der Lichtstrahl des Emitters 21 gelangt dann weiter durch das Okular 11 kollimiert in das rechte Auge 5 und wird an der Netzhaut 29 des rechten Auges 5 diffus reflektiert. Ein möglicher defokussierter Zustand des rechten Auges 5 erzeugt einen abweichenden Öffnungswinkel (divergent oder konvergent) des reflektierten Strahlenbündels zwischen dem rechten Auge 5 und dem Okular 11 relativ zum einfallenden Lichtstrahl.

Das reflektierte Strahlenbündel durchläuft wieder das Okular 11 und wird im zweiten Umkehrprisma 19 wieder an der gleichen Stelle ausgekoppelt, wo eingangs die Einkopplung über das Hilfsprisma 27 erfolgte. Das Strahlenbündel durchläuft das kleine Hilfsprisma 27 sowie das optische System 26 und wird an der Reflexionsschicht 25 des ersten Umkehrprismas 18 reflektiert. Das reflektierte Strahlenbündel durchläuft nun den Strahlteiler 22 und die Detektorlinse 23 und trifft dann auf den Detektor 24, der hier als CCD-Chip oder CMOS-Sensor ausgebildet ist. Dadurch kann der Defokuszustand des Auges 5 gemessen werden.

Für den Detektor 24 kann anstelle eines ortsauflösenden CMOS- oder CCD-Sensors auch ein flächenseparierter Sensor mit zwei oder mehr einzeln auslesbaren Teilflächen treten. Es sind auch Anordnungen mit außeraxialen Quadrantendioden oder PSD oder auch Diodenarrays möglich.

In der linken Hälfte 3 ist ein linker Beobachtungskanal 8 ausgebildet, der bezüglich der Mittelachse 4 spiegelsymmetrisch zum rechten Beobachtungskanal 7 ist, und ist ferner eine zweite konfokale Meßanordnung 20' angeordnet, die spiegelsymmetrisch zur ersten konfokalen Meßanordnung 20 ausgebildet ist.

Die Spotgrößen der Augenreflexe aus beiden Hälften 2, 3 werden durch Auswertung der Signale der Detektoren 24 verglichen. Eine Elektronik 30, die z.B. in der ersten konfokalen Meßanordnung 20 enthalten sein kann, liefert auf der Basis eines Differenzsignals der Signale der beiden Detektoren 24 der beiden konfokalen Meßanordnungen 20, 20' ein Stellsignal, mit dem z.B. ein in der rechten Hälfte 2 vorgesehener Aktuator 31 (hier ein Schrittmotor 31) angesteuert werden kann. Der Schrittmotor 31 ist mit dem Halter 17 verbunden und kann die Fokussierlinse 14 in Längsrichtung der rechten Hälfte 2 relativ zum Halter 17 bewegen. Damit ist es möglich, mittels des Schrittmotors 31 den gemessenen Defokuszustand zwischen beiden Augen 5, 6 in der Art und Weise auszugleichen, daß der relative Defokuszustand bzw. der relative sphärische Augenfehler zwischen dem Auge 5 sowie der rechten Hälfte 2 einerseits und dem Auge 6 sowie der linken Hälfte 3 andererseits möglichst Null wird. Es liegt somit eine automatische Dioptrienkompensation vor. Nach Durchführung dieser automatischen Dioptrienkompensation kann der Benutzer über den mittleren Fokusknopf 15 beide Fernrohrhälften 2, 3 synchron fokussieren, da eine Drehung des Fokusknopfes 15 zu einer axialen Verschiebung der beiden Fokussierlinsen 14, 14' in beiden Hälften 2, 3 führt. Betreffend der Fokussierlinse 14 wird mittels dem Halter 17 die Fokussierlinse 14 relativ zum Schrittmotor 31 und somit in Längsrichtung verschoben.

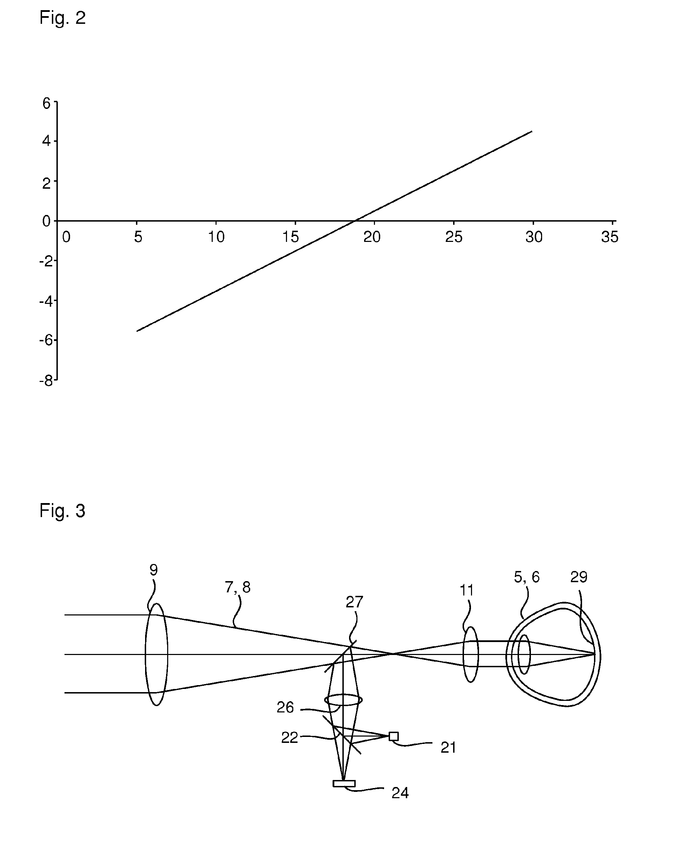

Als Detektorsignal kann neben oder zusätzlich zur Spotgröße die Intensität des Strahlenbündels auf dem Detektor im Fokusbereich in beiden Fernrohrhälften 2, 3 und somit in den entsprechenden Strahlkanälen gemessen werden. Die Differenz der Intensitäten aus beiden Kanälen kann auch als Stellgröße verwendet werden. In Fig. 2 ist beispielhaft ein linearer Zusammenhang zwischen dem Spotradius (hier die Anzahl der beleuchteten Pixel auf dem Sensor 24) und dem Fokuszustand des Auges gezeigt, wobei auf der horizontalen Achse die Anzahl der beleuchteten Pixel und auf der vertikalen Achse die Dioptrie aufgetragen sind. Aus Fig. 2 ist zu entnehmen, daß aufgrund des linearen Zusammenhangs eine gute Regelung bzw. eine gute automatische Defokuskompensation möglich ist.

Bei dem erfindungsgemäßen binokularen Fernrohr 1 wird somit eine absolute Messung durchgeführt und aus der Differenz kann die Kompensation des relativen Defokuszustandes der beiden Augen unabhängig von der eingestellten Fokuslage des rechten und linken Beobachtungskanals 7 und 8 eingestellt werden.

Die konfokalen Meßanordnungen 20 und 20' sind statisch, da weder der Emitter 21 noch der Detektor 24 bewegt werden müssen. Dadurch ist ein kompakter Aufbau möglich.

Die beschriebene Kombination der konfokalen Meßanordnung 20, 20' sowie des beschriebenen Meßverfahrens und die Ankopplung an den Beobachtungskanal 7, 8 der jeweiligen Hälfte 2, 3 des binokularen Fernrohrs ermöglicht erstmals die Integration in ein handgehaltenes binokulares Fernrohr.

In Fig. 3 ist zur Verdeutlichung die Ankopplung der konfokalen Meßanordnung 20, 20' an den jeweiligen Beobachtungskanal 7, 8 der rechten und linken Hälfte 2, 3 des binokularen Fernrohrs 1 dargestellt, wobei gleiche Elemente mit gleichen Bezugszeichen bezeichnet sind und nur die Elemente eingezeichnet sind, die für das grundlegende optische Prinzip notwendig sind. Über das Hilfsprisma 27 erfolgt die Einkopplung des Lichtes des Emitters 21 in den jeweiligen Beobachtungskanal bzw. Beobachtungsstrahlengang 7, 8. Ferner dient das Hilfsprisma 27 auch zur Auskopplung des vom Auge reflektierten Strahlenbündels.

Bei dem erfindungsgemäßen Fernrohr 1 kann die Gesamteffizienz der konfokalen Meßanordnung 20, 20' durch die Ausbildung des Strahlenteilers 22 als Polarisationsteiler gesteigert werden. Der Polarisationsteiler 22 vermeidet Rückreflexe des optischen Systems (beispielsweise aus dem Okular 11) auf den Detektor 24, indem nur Lichtanteile mit geänderter Polarisationsrichtung zum Detektor 24 gelangen. Durch die Cornea des Auges 5, 6 und die Streuung an der Retina 29 des Auges 5, 6 wird die Polarisationsrichtung des einfallenden Strahlenbündels geändert und kann so zu gewissen Teilen den Detektor 24 erreichen. Durch die Verwendung einer weiteren doppelbrechenden Schicht im Strahlengang kann die Effizienz nochmals gesteigert werden.

Ferner kann die Detektorlinse 23 weggelassen werden, wenn das optische System 26 für die Abbildung auf den Detektor 24 genügt. Des weiteren ist es möglich, daß zwischen dem Emitter 21 und dem Strahlteiler 22 eine weitere Linse eingebracht wird, um die Strahlung des Emitters 21 zu bündeln. Das optische System 26 kann auch zwischen dem Strahlteiler 22 und der Umlenkungsschicht 25 angeordnet sein.

## Patentansprüche

1. Binokulares Fernrohr mit
einer einen linken und einen rechten Beobachtungskanal (7, 8) aufweisenden Beobachtungsoptik,
einer Einrichtung (15, 16, 17, 14, 14') zur gleichzeitigen Fokussierung des linken und rechten Beobachtungskanals (7, 8),
und einem Modul (20, 21, 22, 30) zur Dioptrienkorrektur,
**dadurch gekennzeichnet, daß** das Modul (20 - 22, 30) über die beiden Beobachtungskanäle (7, 8) den relativen sphärischen Augenfehler zwischen beiden Augen (5, 6) des Benutzers mißt und in Abhängigkeit des gemessenen relativen sphärischen Augenfehlers die Abbildungseigenschaften in einem der beiden Beobachtungskanäle (7, 8) so ändert, daß der relative sphärische Augenfehler kompensiert ist.

2. Fernrohr nach Anspruch 1, **dadurch gekennzeichnet, daß** das Modul (20 - 22, 30) die Abbildungseigenschaften des einen Beobachtungskanals (7) durch Bewegen einer Linse (14) ändert.

3. Fernrohr nach Anspruch 1 oder 2, bei dem das Modul (20 - 22, 30) zur Dioptrienkorrektur den Defokuszustand beider Augen (5, 6) mißt und daraus den relativen sphärischen Augenfehler ableitet.

4. Fernrohr nach einem der obigen Ansprüche, **dadurch gekennzeichnet, daß** das Modul (20 - 22, 30) für jeden der beiden Beobachtungskanäle (7, 8) jeweils eine Lichtquelle (21), die einen Lichtstrahl abgibt, und ein optisches System (26), das den Lichtstrahl über den Beobachtungskanal (7, 8) in das jeweilige Auge (5, 6) des Benutzers führt, und einen Detektor (24) aufweist,
wobei der am Augenhintergrund des Auges (5, 6) reflektierte Lichtstrahl über den Beobachtungskanal (7, 8) und das optische System auf den Detektor (24) gerichtet wird, der ein Detektorsignal abgibt, und wobei anhand der beiden Detektorsignale der relative sphärische Augenfehler abgeleitet wird.

5. Fernrohr nach Anspruch 4, **dadurch gekennzeichnet, daß** die Lichtquelle (21), das optische System (26) und der Detektor (24) in jedem der beiden Beobachtungskanäle (7, 8) jeweils als konfokale Meßanordnung ausgebildet sind.

6. Fernrohr nach Anspruch 4 oder 5, **dadurch gekennzeichnet, daß** die Lichtquelle (21) den Lichtstrahl mit einer Wellenlänge im Bereich von 780 - 1.060 nm abgibt.

7. Fernrohr nach einem der Ansprüche 4 bis 6, **dadurch gekennzeichnet, daß** die Lichtquelle (24) als Punktlichtquelle ausgebildet ist.

8. Fernrohr nach einem der Ansprüche 4 bis 7, **dadurch gekennzeichnet, daß** das Modul (20 - 22, 30) die Spotgröße auf dem Detektor (24) als Detektorsignal auswertet.

9. Fernrohr nach einem der Ansprüche 4 bis 8, bei dem das Modul (20 - 22, 30) die Intensität des Spots auf dem Detektor (24) als Detektorsignal auswertet.

10. Fernrohr nach einem der Ansprüche 4 bis 9, **dadurch gekennzeichnet, daß** zwischen dem optischen System (26) einerseits und der Lichtquelle (21) und dem Detektor (24) andererseits ein Strahlteiler (22) angeordnet ist.

11. Fernrohr nach Anspruch 10, **dadurch gekennzeichnet, daß** der Strahlteiler (22) als Polarisationsteiler ausgebildet ist.

12. Fernrohr nach einem der Ansprüche 4 bis 11, **dadurch gekennzeichnet, daß** jeder Beobachtungskanal ein Objektiv (9), ein Prismensystem (10) und ein Okular (11) aufweist, wobei das optische System (26) den Lichtstrahl der Lichtquelle über das Prismensystem (10) in den Beobachtungskanal einkoppelt.

13. Fernrohr nach einem der obigen Ansprüche, bei dem die Einrichtung (15, 16, 17, 14, 14') zur gleichzeitigen Fokussierung ein einzelnes Einstellelement (15) aufweist, wobei die Betätigung des Einstellelementes (15) eine synchrone Fokussierung beider Beobachtungskanäle bewirkt.

14. Verfahren zum Durchführen einer Dioptrienkorrektur bei einem binokularen Fernrohr mit einer einen linken und einen rechten Beobachtungskanal aufweisenden Beobachtungsoptik, und einer Einrichtung zur gleichzeitigen Fokussierung des linken und rechten Beobachtungskanals,
**dadurch gekennzeichnet, daß**
über die beiden Beobachtungskanäle der relative sphärische Augenfehler zwischen den beiden Augen des Benutzers gemessen wird und in Abhängigkeit des gemessenen relativen sphärischen Augenfehlers die Abbildungseigenschaften in einem der beiden Beobachtungskanäle so geändert werden, daß der relative sphärische Augenfehler kompensiert wird.
